# EUROPÄISCHE PATENTSCHRIFT

(11) **EP 3 443 378 B1**
(45) Veröffentlichungstag und Bekanntmachung des Hinweises auf die Patenterteilung: **02.12.2020**
(21) Anmeldenummer: 17737520.1
(22) Anmeldetag: 30.06.2017
(51) Int. Cl.: G01S 7/497, G01S 17/00, G01S 17/88, G01B 11/30, G01B 5/00, G01B 11/245, G01B 11/27, G01S 7/481, G01S 17/42

(54) **VORRICHTUNG ZUM BERÜHRUNGSFREIEN BESTIMMEN DER GERADHEIT WENIGSTENS EINES LANGPRODUKTS UND VERFAHREN ZUM KALIBRIEREN EINER DERARTIGEN VORRICHTUNG**
DEVICE FOR CONTACTLESSLY DETERMINING THE STRAIGHTNESS OF AT LEAST ONE LONG PRODUCT AND METHOD FOR CALIBRATING A DEVICE OF THIS KIND
DISPOSITIF SERVANT À DÉFINIR SANS CONTACT LA RECTITUDE D'AU MOINS UN PRODUIT ALLONGÉ ET PROCÉDÉ D'ÉTALONNAGE D'UN DISPOSITIF DE CE TYPE

(43) Veröffentlichungstag der Anmeldung: 20.02.2019
(73) Patentinhaber: Fraunhofer-Gesellschaft zur Förderung der angewandten Forschung e.V., 80686 München (DE)
(72) Erfinder: CARL, Daniel, 79312 Emmendingen (DE); JETTER, Volker, 79206 Breisach (DE); SCHMID-SCHIRLING, Tobias, 79117 Freiburg (DE)
(74) Vertreter: RACKETTE Patentanwälte PartG mbB
(86) Internationale Anmeldenummer: PCT/EP2017/066339
(87) Internationale Veröffentlichungsnummer: WO 2019/001738

(56) Entgegenhaltungen:
- DE-A1- 19 741 730
- JP-A- S61 128 112
- KR-A- 20110 078 619
- US-A- 4 201 476
- US-A- 5 473 436
- US-A1- 2014 168 414
- US-B1- 7 110 910

## Beschreibung

Die Erfindung betrifft eine Vorrichtung zum berührungsfreien Bestimmen der Geradheit wenigstens eines Langprodukts gemäß dem Oberbegriff des Anspruchs 1.

Die Erfindung betrifft weiterhin ein Verfahren zum Kalibrieren einer Vorrichtung zum berührungsfreien Bestimmen der Geradheit wenigstens eines Langprodukts.

Eine derartige Vorrichtung ist aus der Produktbeschreibung "STRAIGHTNESS CHECK" der LAP GmbH Laser Applikationen, Lüneburg, Deutschland, am 7. Juni 2017 verfügbar unter der Internet-Adresse "https://www.lap-laser.com/de/industrie/ihre-aufgabe/ messen/geradheit/STRAIGHTNESS_CHECK_fly_de_1-9_2016-03-03_mix2.pdf" bekannt. Die vorbekannte Vorrichtung zum berührungsfreien Bestimmen der Geradheit wenigstens eines Langprodukts verfügt über eine Anzahl von Strahlungsquellenmodulen, mit denen jeweils ein quer zu einer Längsrichtung eines Langprodukts ausgerichteter Lichtvorhang als Messstrahlung emittierbar ist, mit der wenigstens ein Langprodukt beaufschlagbar ist. Weiterhin ist eine der Anzahl von Strahlungsquellenmodulen entsprechende Anzahl von Strahlungsdetektoren vorhanden, mit denen an in Längsrichtung des Langprodukts verteilten verschiedenen Auftreffbereichen durch das oder jedes Langprodukt modifizierte Messstrahlung als Detektionsstrahlung in Gestalt eines Schattenwurfs erfassbar ist. Mit einer Steuer- und Auswerteeinheit ist aus der Detektionsstrahlung generierten Daten in Gestalt des jeweiligen Versatzes von Schattenwürfen quer zu der Längsrichtung des Langprodukts die Geradheit des oder jedes von Messstrahlung beaufschlagten Langprodukts bestimmbar.

Aus DE 197 41 730 A1 sind ein Verfahren und eine Vorrichtung zur Ermittlung der Oberflächenkontur von Messobjekten bekannt, womit Oberflächenkonturen durch flächiges Abtasten an einer Vielzahl von Punkten erfassbar sind.

Der Erfindung liegt die Aufgabe zugrunde, eine Vorrichtung der eingangs genannten Art anzugeben, mit der eine variable, schnelle und verhältnismäßig genaue Bestimmung der Geradheit wenigstens eines Langprodukts geschaffen ist.

Der Erfindung liegt weiterhin die Aufgabe zugrunde, ein Verfahren zum Kalibrieren einer derartigen Vorrichtung anzugeben.

Diese Aufgaben werden mit den kennzeichnenden Merkmalen des Anspruchs 1 und mit den Merkmalen des Anspruchs 13 gelöst.

Bei der erfindungsgemäßen Vorrichtung zum Bestimmen der Geradheit erfolgt ein aktives Bewegen der Messstrahlung quer zu der Längsrichtung des oder wenigstens eines Langprodukts. Aus über die Steuerung der aktiven Bewegung gewonnenen Ortsinformationen zu den Auftreffbereichen und charakteristischen Intensitätswerten der aus den Auftreffbereichen stammenden Detektionsstrahlung lassen sich die Geradheit schnell und verhältnismäßig genau sowie bei unterschiedlichen Quergeschwindigkeiten der Messstrahlung quer zur Längsrichtung auch variabel bestimmen.

Mit dem erfindungsgemäßen Verfahren ist es in diesem Zusammenhang möglich, ohne genaue Kenntnis der Geradheit eines Langprodukts über mehrere Messzyklen Referenzwerte für eine Referenzgeradheit auf der Grundlage von signifikanten Daten aus charakteristischen Intensitätswerten der Detektionsstrahlung zu bestimmen.

Weitere zweckmäßige Ausgestaltungen der Erfindung sind Gegenstand der Unteransprüche.

Diese Ausgestaltungen weisen die nachfolgend umrissenen Vorteile auf.

Durch die Wahl der charakteristischen Intensitätswerte gemäß Anspruch 2 oder Anspruch 3 ergibt sich eine verhältnismäßig hohe Genauigkeit beim Bestimmen der Geradheit.

Durch die Wahl einer direkt mit dem Bewegen der Messstrahlung gekoppelten Ausgangsgrundlage der Ortsinformationen gemäß Anspruch 4 oder Anspruch 5 ergibt sich ebenfalls eine verhältnismäßig hohe Genauigkeit beim Bestimmen der räumlichen Lage der Auftreffbereiche.

Durch die Wahl der Messstrahlung gemäß Anspruch 6 als ultraviolette, sichtbare oder infrarote Strahlung ergibt sich ein verhältnismäßig kostengünstiger und im betrieblichen Alltag beherrschbarer Aufbau.

Mit der Vorrichtung gemäß Anspruch 7 mit einem Strahlungsquellenmodul, mit dem Messstrahlung auch in Längsrichtung bewegbar ist, lässt sich die Geradheit eines Langprodukts mit verhältnismäßig wenig aktiver Bewegung des Langprodukts in Längsrichtung bestimmen.

Die Vorrichtung gemäß Anspruch 8 zeichnet sich durch eine zum Gewinnen von Ortsinformationen messtechnisch einfacher Anordnung aus.

Durch die Vorrichtungen gemäß Anspruch 9 und Anspruch 10 ergibt sich ein verhältnismäßig schnelles Bestimmen der Geradheit des betreffenden Langprodukts.

Bei der Vorrichtung gemäß Anspruch 11 lassen sich bei einem ruhenden Langprodukt Abweichungen von der Geradheit in zwei Dimensionen bestimmen.

Bei der Vorrichtung gemäß Anspruch 12 lässt sich zum einen bei Vorsehen von Strahlungsquellenmodulen nur auf einer Seite des betreffenden Langprodukts auch Abweichungen von Geradheit in zwei Richtungen und bei Vorsehen von in Querrichtung voneinander beabstandeten Strahlungsquellenmodulen überdies die Genauigkeit der Geradheitsbestimmung verbessern.

Die Wahl der signifikanten Daten gemäß Anspruch 14 oder Anspruch 15 gestattet ein statistisch robustes Festlegen der Referenzgeradheit.

Weitere zweckmäßige Ausgestaltungen und Vorteile der Erfindung ergeben sich aus der nachfolgenden Beschreibung von Ausführungsbeispielen mit Bezug auf die Figuren der Zeichnung.

Es zeigen:
- Fig. 1: in einer schematischen Darstellung ein Ausführungsbeispiel einer Vorrichtung gemäß der Erfindung mit einem Strahlungsquellenmodul, einem Strahlungsdetektor, einer Steuer- und Auswerteeinheit sowie einem als Blankstahlstange mit rundem Querschnitt ausgebildeten Langprodukt,
- Fig. 2: in einer Draufsicht das Ausführungsbeispiel gemäß Fig. 1,
- Fig. 3: in einer Stirnansicht das Ausführungsbeispiel gemäß Fig. 1,
- Fig. 4: in einer anschaulichen Darstellung Isolinien der Intensität von rückgeworfener Detektionsstrahlung bei einem Langprodukt mit kreisförmigem Querschnitt und den Pfad der Apertur eines Strahlungsdetektors,
- Fig. 5: den zeitlichen Verlauf von Intensitäten von aus Auftreffbereichen eines Langprodukts unbekannter Geradheit und eines Langprodukts mit einer Referenzgeradheit rückgeworfener Detektionsstrahlung,

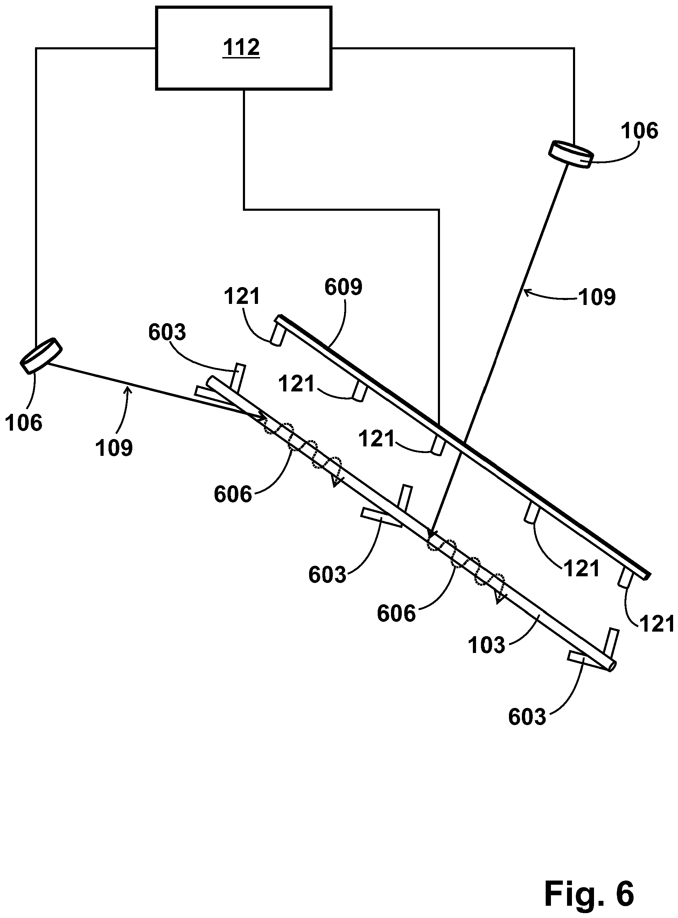

- Fig. 6: in einer perspektivischen schematischen Ansicht ein weiteres Ausführungsbeispiel einer Vorrichtung gemäß der Erfindung mit zwei in Längsrichtung und/oder in Querrichtung eines Langprodukts voneinander beabstandeten, zum Erzeugen punktartiger Messstrahlung eingerichteten Strahlungsquellenmodulen und einem sich in Längsrichtung des Langprodukts erstreckenden sowie in Querrichtung mittig zwischen den Strahlungsquellenmodulen angeordneten Strahlungsdetektor, der über eine Anzahl von Strahlungsempfängern verfügt, wobei die Strahlungsquellenmodule zu einem kontinuierlichen Abtasten des Langprodukts in Längsrichtung eingerichtet sind,
- Fig. 7: in einer perspektivischen schematischen Ansicht ein weiteres Ausführungsbeispiel einer Vorrichtung gemäß der Erfindung, das ähnlich wie das Ausführungsbeispiel gemäß Fig. 6 jedoch nur mit einem schrittweise in Querrichtung abtastenden Strahlungsquellenmodul ausgebildet ist,
- Fig. 8: in einer perspektivischen schematischen Ansicht ein weiteres Ausführungsbeispiel einer Vorrichtung gemäß der Erfindung, das ähnlich wie das Ausführungsbeispiel gemäß Fig. 6, jedoch mit linienartiger, in Längsrichtung ausgerichteter Messstrahlung ausgebildet ist,
- Fig. 9: in einer Stirnansicht ein punktartiges Auflager einer starren Auflagereinheit eines Ausführungsbeispiels einer Vorrichtung gemäß der Erfindung,
- Fig. 10: in einer perspektivischen Ansicht ein längliches Auflager einer Auflagereinheit für ein Ausführungsbeispiel einer Vorrichtung gemäß der Erfindung,
- Fig. 11: in einer Stirnansicht ein durch zwei drehbare Walzen gebildetes drehbares Auflager einer Auflagereinheit für ein Ausführungsbeispiel einer Vorrichtung gemäß der Erfindung,
- Fig. 12: ein weiteres Ausführungsbeispiel einer Vorrichtung gemäß der Erfindung entsprechend Fig. 1 mit einem Langprodukt mit einem hexagonalen Querschnitt als Beispiel für einen nicht rundlichen Querschnitt,
- Fig. 13: die Intensitätsverläufe von dem nicht rundlichen und nicht exakt geraden Langprodukt gemäß Fig. 12 rückgeworfener, von drei beidseitig von zwei Kanten liegenden Flachseiten rückgeworfener Detektionsstrahlung und
- Fig. 14: in einem Blockschaubild den beispielhaften Aufbau einer Steuer- und Auswerteeinheit für eine Vorrichtung gemäß der Erfindung.

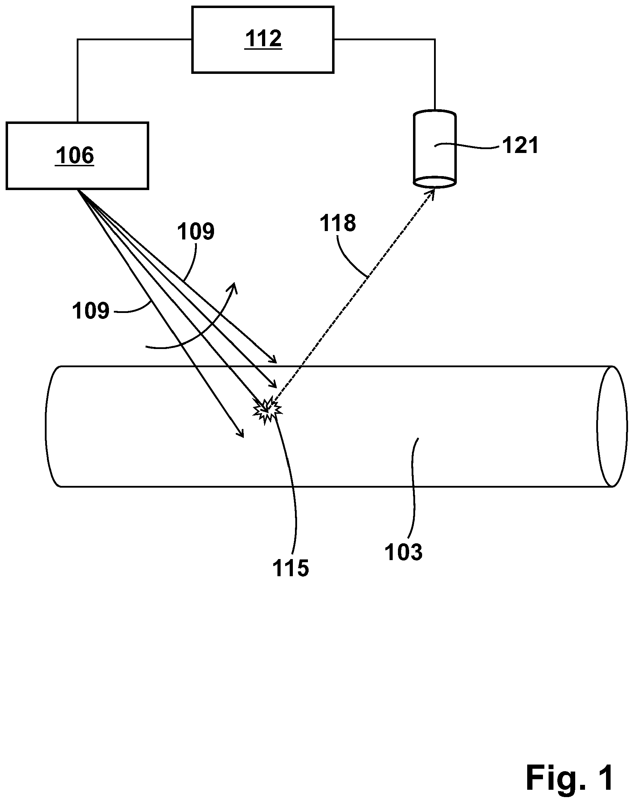

Fig. 1 zeigt in einer schematischen Darstellung in einer Seitenansicht ein Ausführungsbeispiel einer Vorrichtung gemäß der Erfindung beim Bestimmen der Geradheit eines Langprodukts in dem Sinne eines Gegenstandes, dessen Erstreckung in einer Längsrichtung wesentlich größer als rechtwinklig zu der Längsrichtung, also in Querrichtung oder in radialer Richtung, ist, das hier in Gestalt einer Blankstahlstange 103 mit kreisförmigem Querschnitt ausgebildet ist.

Das Ausführungsbeispiel gemäß Fig. 1 verfügt als Strahlungsquellenmodul über einen Laserscanner 106, mit dem punktartige Messstrahlung 109 vorzugsweise im ultravioletten, sichtbaren oder infraroten Spektralbereich erzeugbar und mit einer Quergeschwindigkeit quer zu der Längsrichtung der Blankstahlstange 103 bewegbar ist.

Der Laserscanner 106 ist an eine Steuer- und Auswerteeinheit 112 angeschlossen, mit der unter anderem die Quergeschwindigkeit der Bewegung der Messstrahlung 109 in Querrichtung der Blankstahlstange 103 beeinflussbar ist.

Bei Auftreffen der punktartigen Messstrahlung 109 auf die verhältnismäßig hochreflektive Oberfläche der Blankstahlstange 103 wird ein Anteil der Intensität der Messstrahlung 109 von einem bei diesem Ausführungsbeispiel verhältnismäßig kleinflächigen Auftreffbereich 115 als Detektionsstrahlung 118 hier reflexionsartig rückgeworfen, deren zeitlichen Verlauf der Intensität durch einen einzelligen Strahlungsdetektor 121 mit einem verhältnismäßig großen Öffnungswinkel als Strahlungsdetektionsmodul erfassbar ist.

Der Strahlungsdetektor 121 ist ebenfalls an die Steuer- und Auswerteeinheit 112 angeschlossen und übergibt an diese den zeitlichen Verlauf der Intensität der Detektionsstrahlung 118 während eines Messzyklus, der durch ein vollständiges Überstreichen der dem Laserscanner 106 zugewandten Oberfläche der Blankstahlstange 103 in Querrichtung gebildet ist.

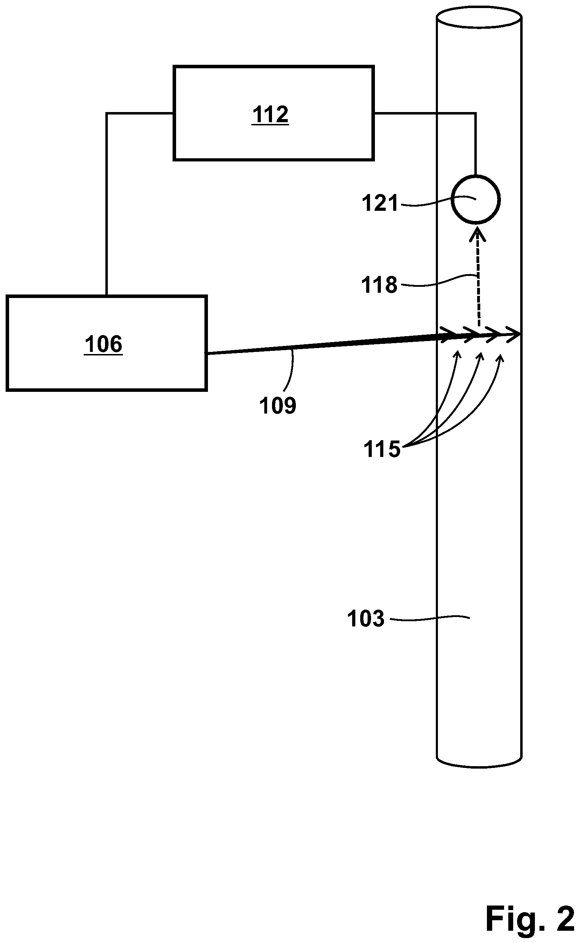

Fig. 2 zeigt in einer schematischen Darstellung das Ausführungsbeispiel gemäß Fig. 1 in Draufsicht, aus der ersichtlich ist, dass der Strahlungsdetektor 121 in Längsrichtung der Blankstahlstange 103 von den Auftreffbereichen 115 beabstandet ist.

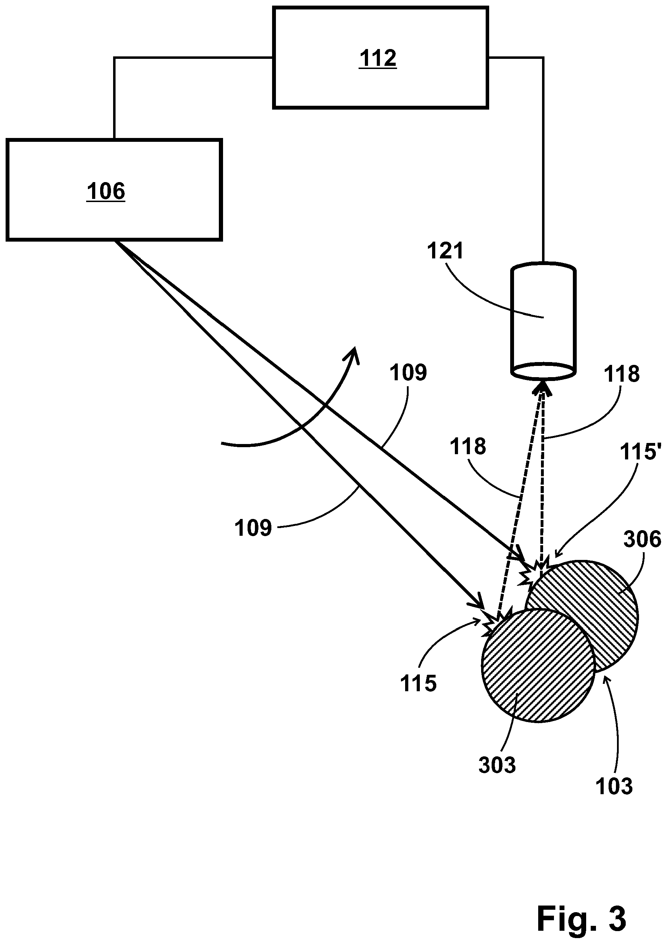

Fig. 3 zeigt in einer Stirnansicht das Ausführungsbeispiel gemäß Fig. 1 mit der hier durch einen ersten Querschnittsbereich 303 und einen zweiten Querschnittsbereich 306 dargestellten Blankstahlstange 103, die aufgrund einer Abweichung der Blankstahlstange 103 von einer idealen Geradheit zueinander versetzt sind.

Dadurch weisen die in Querrichtung der Blankstahlstange 103 voneinander beabstandeten Auftreffbereiche 115, 115' im ersten Querschnittsbereich 303 und im zweiten Querschnittsbereich 306 einen unterschiedlichen Abstand von dem Laserscanner 106 und dem Strahlungsdetektor 121 auf, was zu einem unterschiedlichen zeitlichen Verlauf der den Strahlungsdetektor 121 beaufschlagenden Intensität hervorruft.

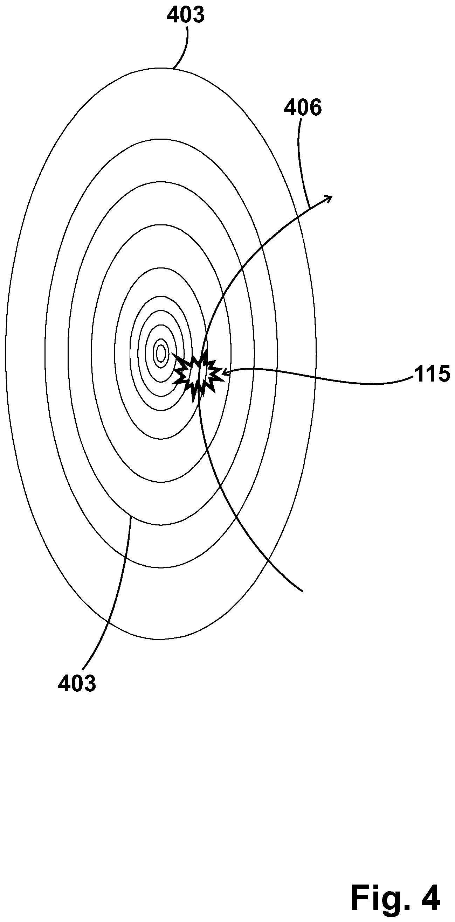

Fig. 4 zeigt zur Veranschaulichung eine Anzahl von Isolinien 403 gleicher Intensität von durch eine Blankstahlstange 103 mit kreisförmigem Querschnitt rückgeworfener Intensität von Messstrahlung 109 zusammen mit einem typischen Aperturpfad 406 des Strahlungsdetektors 121 mit einem beispielhaft im Bereich der maximalen Intensität eingezeichneten Auftreffbereich 115.

Aus der Darstellung gemäß Fig. 4 ist ersichtlich, dass während eines Messzyklus der zeitliche Verlauf der Intensität der von dem Strahlungsdetektor 121 erfassten Detektionsstrahlung 118 ein Maximum aufweist, dessen zeitliche Lage von dem Abstand des Auftreffbereichs 115 relativ zu einer Referenzposition eines ideal geraden Langprodukts, hier in Gestalt der Blankstahlstange 103, abhängt.

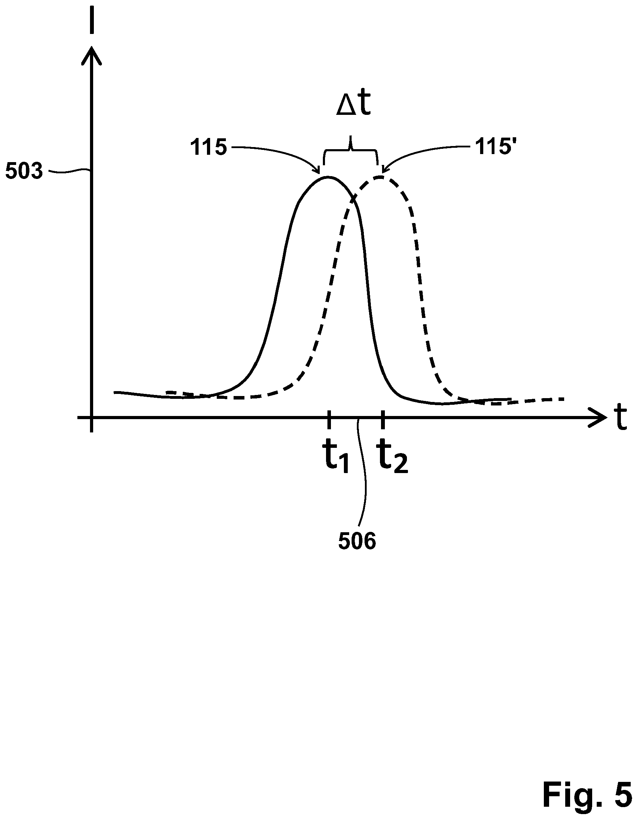

Fig. 5 zeigt in einer schematischen Darstellung den zeitlichen Verlauf der auf der Ordinaten 503 abgetragenen Intensität I von Detektionsstrahlung 118 in Abhängigkeit der auf der Abszisse 506 abgetragenen Zeit t bei Beaufschlagen eines Auftreffbereichs 115 einer Blankstahlstange 103, deren Geradheit zu bestimmen ist, und eines Auftreffbereichs 115' einer als Referenz dienenden Blankstahlstange mit einer, wie weiter unten näher erläutert vorzugsweise erfindungsgemäß bestimmten, Referenzgeradheit zu Zeitpunkten t₁ und t₂, wobei der Auftreffbereich 115 der zu vermessenden Blankstahlstange 103 gegenüber dem Auftreffbereich 115' der als Referenz dienenden Blankstahlstange räumlich versetzt ist. Dadurch sind bei diesem Ausführungsbeispiel die durch den Strahlungsdetektor 121 erfassten und als charakteristische Intensitätswerte ausgewerteten maximalen Intensitäten um die Zeit Δt=t₂-t₁ versetzt.

Aus dieser Zeit Δt ist beispielsweise bei Kenntnis der Quergeschwindigkeit der Messstrahlung 109 sowie der relativen räumlichen Lagen des Laserscanners 106 sowie des Strahlungsdetektors 121 zueinander zusammen mit geeignet gewonnenen Ortsinformationen bezüglich der Auftreffbereiche 115 in Längsrichtung die Geradheit des betreffenden Langprodukts in Gestalt einer radialen Längenabweichung von einer idealen Geradheit pro Längeneinheit gegenüber eine Referenzgeradheit bestimmbar.

Alternativ oder ergänzend zu den maximalen Intensitäten lassen sich als charakteristische Intensitätswerte auch auf Flanken einer in Fig. 5 dargestellten Intensitätsverteilung liegende signifikante Intensitätswerte heranziehen.

Dabei lässt sich die Genauigkeit beim Bestimmen der Geradheit beispielsweise dadurch nach Bedarf einstellen, dass für eine verhältnismäßig hohe Genauigkeit die Messstrahlung 109 verhältnismäßig langsam mit einem dementsprechend verhältnismäßig langen Messzyklus und für eine demgegenüber zwar ungenauere, dafür aber schnellere Messung während eines Messzyklus verhältnismäßig schnell bewegt wird.

Fig. 6 zeigt in einer schematischen Darstellung ein weiteres Ausführungsbeispiel einer Vorrichtung gemäß der Erfindung, wobei sich bei dem anhand Fig. 1 bis Fig. 5 erläuterten Ausführungsbeispiel und bei dem Ausführungsbeispiel gemäß Fig. 6 einander entsprechende Elemente mit den gleichen Bezugszeichen versehen und im Weiteren zum Teil nicht nochmals näher erläutert sind. Bei dem Ausführungsbeispiel gemäß Fig. 6 sind zwei Laserscanner 106 eines Strahlungsquellenmoduls vorhanden, die sowohl in Längsrichtung als auch in Querrichtung in Bezug auf eine an punktartigen Auflagern 603 einer Auflagereinheit gehaltenen Blankstahlstange 103 als Beispiel eines Langprodukts angeordnet sind. Mit beiden Laserscannern 106 sind, wie durch kurvenartig mäandrierende Abtastbahnen 606 beispielhaft angedeutet, die Messstrahlungen 109 zweckmäßigerweise frei von einer Richtungsumkehr in Längsrichtung jeweils über einen Messabschnitt, auf jeden Fall aber vorbestimmt und reproduzierbar, in Längsrichtung der Blankstahlstange 103 als auch zweckmäßigerweise gleichmäßig oszillierend in Querrichtung der Blankstahlstange 103 bewegbar.

Die Ortsinformationen bezüglich der Lage der Auftreffbereiche 115 in Längsrichtung der Blankstahlstange 103 lassen sich insbesondere bei einem kontinuierlichen, scanartigen Bewegen in Längsrichtung und in Querrichtung aus einer Längsgeschwindigkeit und einer Quergeschwindigkeit jeweils bezogen auf Referenzzeitpunkt oder direkt aus der Richtung der Messstrahlung 109 bestimmen.

In Querrichtung der Blankstahlstange 103, und dabei vorzugsweise mittig zwischen den Laserscannern 106, verfügt das Ausführungsbeispiel gemäß Fig. 6 über ein Strahlungsdetektionsmodul 609 mit einer Empfängerleiste 609, die in Längsrichtung der Blankstahlstange 103 ausgerichtet und mit mehreren Strahlungsdetektoren 121 bestückt ist, die in Längsrichtung der Blankstahlstange 103 zweckmäßigerweise gleichmäßig beabstandet sind.

Vorzugsweise sind bei dem Ausführungsbeispiel gemäß Fig. 6 die Laserscanner 106 in Querrichtung der Blankstahlstange 103 so angeordnet, dass deren Messstrahlungen 109 rechtwinklig zueinander ausgerichtet sind.

Bei dem Ausführungsbeispiel gemäß Fig. 6 lassen sich Verformungen der Blankstahlstange 103 und damit Abweichungen von einer idealen Geradheit verhältnismäßig in zwei Dimensionen bestimmen.

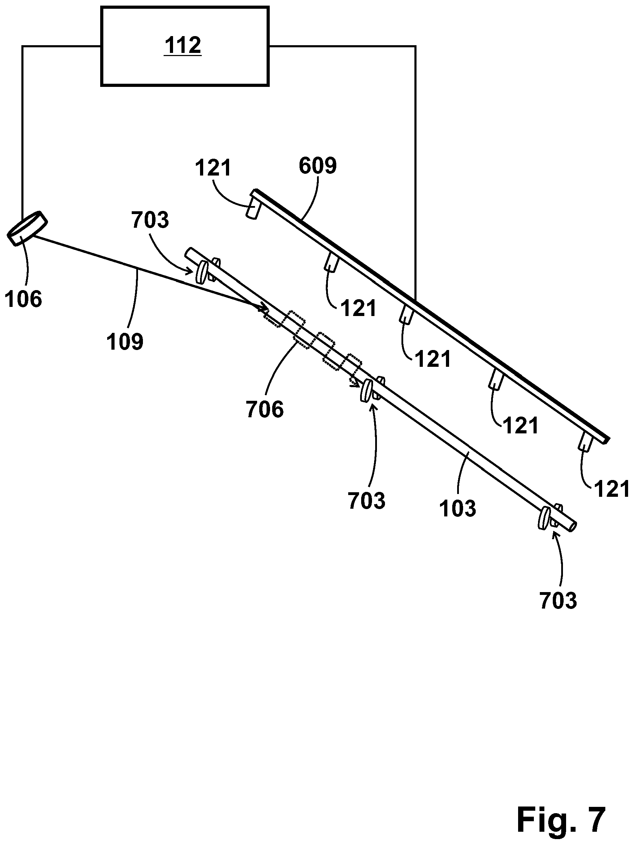

Fig. 7 zeigt ein weiteres Ausführungsbeispiel einer Vorrichtung gemäß der Erfindung, wobei sich bei dem anhand Fig. 1 bis Fig. 6 erläuterten Ausführungsbeispielen und bei dem Ausführungsbeispiel gemäß Fig. 7 einander entsprechende Elemente mit den gleichen Bezugszeichen versehen und im Weiteren zum Teil nicht nochmals näher erläutert sind. Die Auflagereinheit bei dem Ausführungsbeispiel gemäß Fig. 7 ist mit einer Anzahl von drehbaren Auflagern 703 ausgestattet, in denen oder mit denen eine aufgelegte Blankstahlstange 103 über einen Winkelbereich von vorzugsweise wenigstens 90 Grad, für höchste Genauigkeit beim Bestimmen der Geradheit jedoch auch bis 360 Grad, drehbar ist. Bei dem Ausführungsbeispiel gemäß Fig. 7 ist das Strahlungsquellenmodul mit einem Laserscanner 106 ausgebildet, der dazu eingerichtet ist, sich in Längsrichtung der Blankstahlstange 103 als Beispiel für ein Langprodukt schrittweise zu bewegen, was hier zu einer rechteckartig mäandrierenden Abtastbahn 706 führt.

Das Ausführungsbeispiel gemäß Fig. 7 zeichnet sich durch die Drehbarkeit eine Langprodukts um dessen Längsachse mit einem verhältnismäßig wenig aufwendigen optischen Aufbau und durch die rechteckartig mäandrierende Abtastbahn 706 durch eine verhältnismäßig hohe Genauigkeit aus.

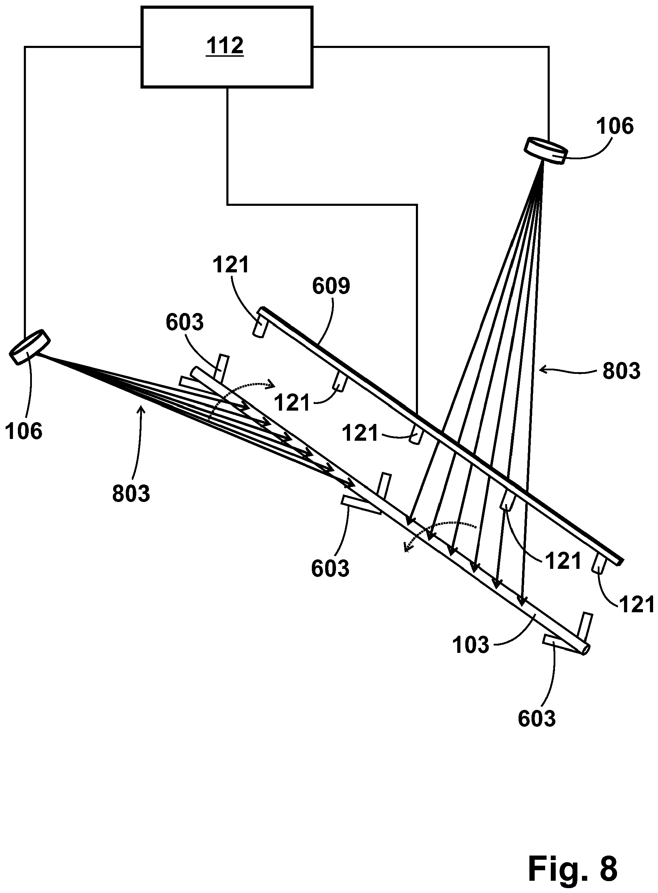

Fig. 8 zeigt in einer schematischen Darstellung ein weiteres Ausführungsbeispiel einer Vorrichtung gemäß der Erfindung, wobei sich bei den voranstehend anhand Fig. 1 bis Fig. 7 erläuterten Ausführungsbeispielen und bei dem Ausführungsbeispiel gemäß Fig. 8 einander entsprechende Elemente mit den gleichen Bezugszeichen versehen und im Weiteren zum Teil nicht nochmals näher erläutert sind. Abweichend von dem anhand Fig. 6 erläuterten Ausführungsbeispiel weisen die Laserscanner 106 eine Strahlformoptik beispielsweise in Gestalt einer Zylinderlinse auf, mit denen sich in Längsrichtung einer Blankstahlstange 103 als Beispiel für ein Langprodukt erstreckende linienartige Messstrahlung 803 erzeugbar ist, die während eines Messzyklus mit einer Quergeschwindigkeit quer zu der Längsrichtung des betreffenden Langprodukts bewegbar ist. Dadurch lässt sich ein Längenabschnitt eines Langprodukts während eines Messzyklus simultan mit mehreren Strahlungsdetektoren 121 eines Strahlungsdetektionsmoduls vermessen und daraus die Geradheit bestimmen.

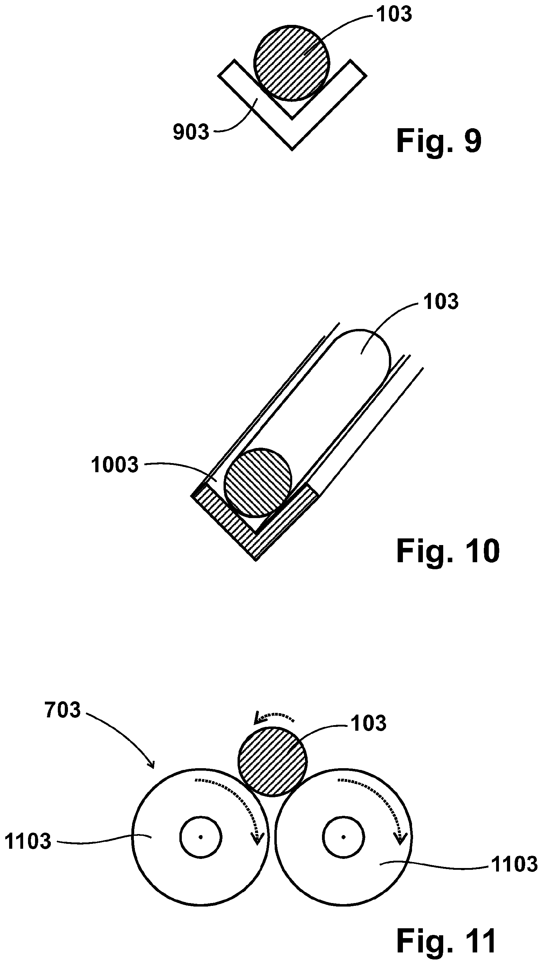

Fig. 9 bis Fig. 11 zeigen in anschaulichen Darstellungen verschiedene Ausgestaltungen von Auflagereinheiten für Vorrichtungen gemäß der Erfindung.

Fig. 9 zeigt in einer Stirnansicht eine Auflagereinheit mit einer Anzahl von in Längsrichtung einer aufgelegten Blankstahlstange 103 verhältnismäßig kurz ausgebildeten Winkelschienenstücken 903 zum statischen Halten der Blankstahlstange 103 an vorzugsweise gleich voneinander beabstandeten Lagerstellen, so dass ein schwerkraftbedingtes Durchbiegen der Blankstahlstange 103 zwischen den Lagerstellen durch Herausrechnen verhältnismäßig einfach kompensierbar ist.

Fig. 10 zeigt in einer perspektivischen abschnittsweisen Ansicht eine Auflagereinheit mit einer länglichen Winkelschiene 1003, mit der ein schwerkraftbedingtes Durchbiegen einer eingelegten Blankstahlstange 103 unterbunden und damit eine dementsprechende rechnerische Kompensation des Schwerkrafteinflusses vermeidbar ist.

Fig. 11 zeigt in einer Stirnansicht eine Auflagereinheit für eine Vorrichtung gemäß der Erfindung, das über in Querrichtung dicht beieinander liegende drehbare Walzen 1103 verfügt, mit denen bei Drehen beispielsweise im Uhrzeigersinn eine aufgelegte Blankstahlstange 103 als Beispiel für ein Langprodukt entgegen dem Uhrzeigersinn drehbar ist, um die Blankstahlstange 103 von verschiedenen Seiten mit Messstrahlung 109, 803 beaufschlagen zu können.

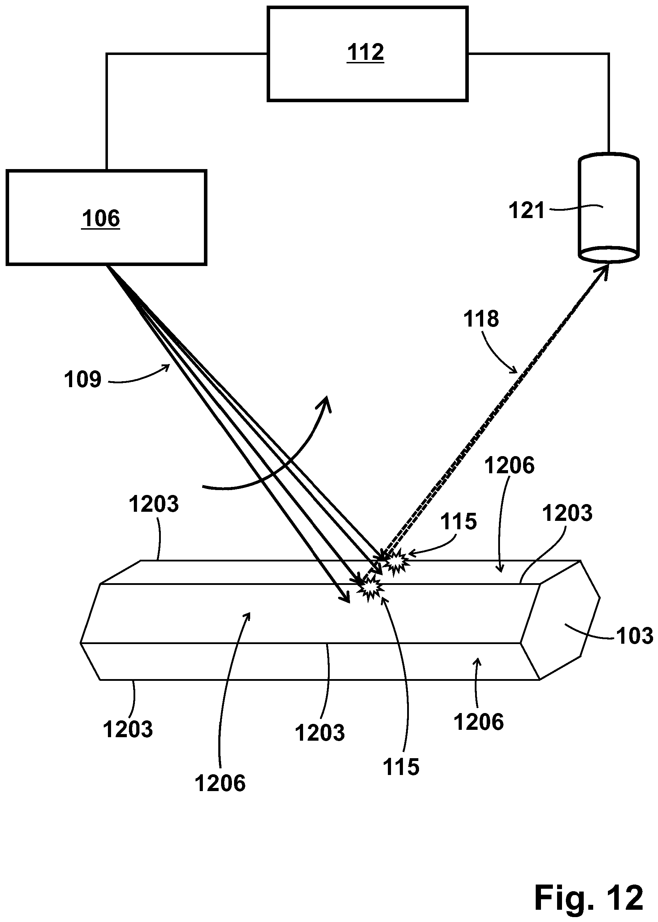

Fig. 12 zeigt in einer schematischen Darstellung das Ausführungsbeispiel einer Vorrichtung gemäß der Erfindung entsprechend Fig. 1, bei dem als Langprodukt eine Blankstahlstange 103 mit einem hexagonalen Querschnitt als Beispiel eines nicht runden Querschnitts dargestellt ist. Aufgrund der zwischen den Kanten 1203 nunmehr planen Außenflächen 1206 ergeben sich nunmehr mehrere Auftreffbereiche 115 mit während eines Messzyklus maximaler Intensität von Detektionsstrahlung 118, die jedoch zeitlich gegenüber Abweichungen von einer idealen Geradheit deutlich unterscheidbar sind.

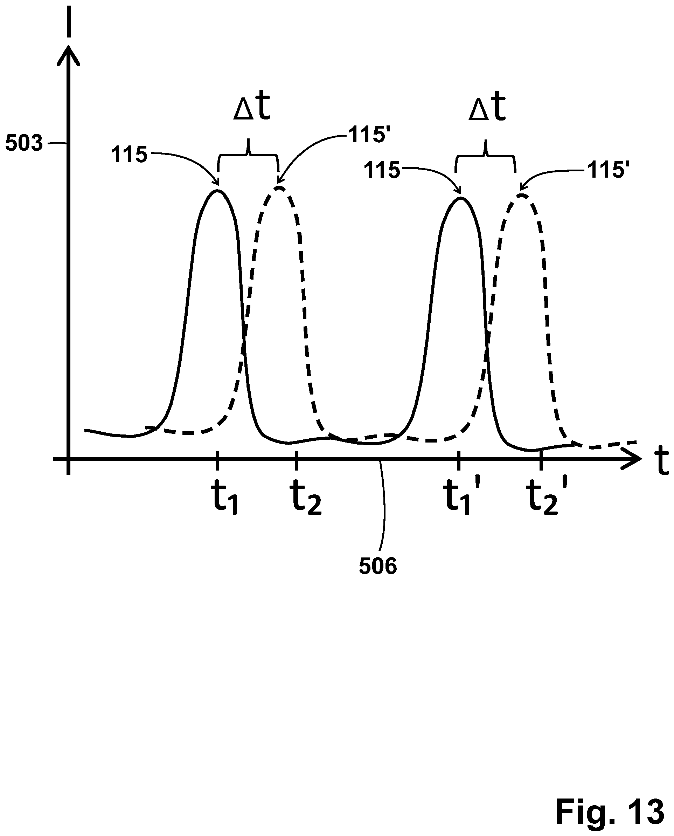

Fig. 13 zeigt in einem Schaubild ähnlich Fig. 5 bei dem Ausführungsbeispiel gemäß Fig. 12 den zeitlichen Verlauf der durch den Strahlungsdetektor 121 erfassten Intensität der Messstrahlung 109 bei Abweichungen der hexagonalen Blankstahlstange 103 von einer idealen Geradheit. Aus Fig. 13 lässt sich entnehmen, dass bei Abweichungen der tatsächlichen Geradheit der hexagonalen Blankstahlstange 103 mit Δt von einer idealen Geradheit, die kleiner als die zeitlichen Abstände t₁, t₁' beziehungsweise t₂, t₂' zwischen Kanten 1203 ist, die Geradheit der hexagonalen Blankstahlstange 103 eindeutig bestimmbar ist.

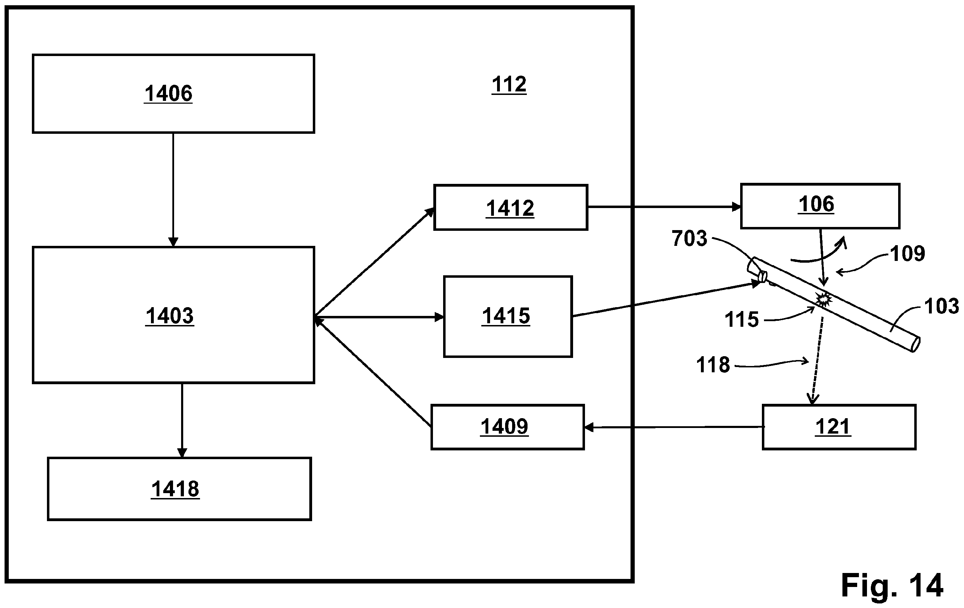

Fig. 14 zeigt in einem verhältnismäßig stark vereinfachten Blockschaubild den Aufbau einer typischen Steuer- und Auswerteeinheit 112 für ein Ausführungsbeispiel von Vorrichtungen gemäß der Erfindung. Die Steuer- und Auswerteeinheit 112 verfügt über ein Zentralmodul 1403, in das Messparameter eines Eingabemoduls 1406 und aus einem dem oder jedem Strahlungsdetektor 121 nachgeordneten Analog/Digital-Wandler 1409 einspeisbar sind. Durch das Zentralmodul 1403 sind weiterhin ein Digital/Analog-Wandler 1412 zum Ansteuern des oder jedes Laserscanners 106 und ein Motorsteuermodul 1415 zum Drehen einer Blankstahlstange 103 ansteuerbar. Schließlich weist die Steuer- und Auswerteeinheit ein Ausgabemodul 1418 zum Anzeigen der ausgewerteten Daten zur Geradheit beispielsweise in Gestalt einer Gut/Schlecht-Anzeige, Akzeptabel/Kritisch/lnakzeptabel-Anzeige oder einer genauen Geradheitswertanzeige auf.

Bei einem Ausführungsbeispiel eines Verfahrens gemäß der Erfindung zum Kalibrieren einer erfindungsgemäßen Vorrichtung wie anhand der voranstehend erläuterten Ausführungsbeispiele beispielhaft erläutert, wird ein Langprodukt beispielsweise in Gestalt einer Blankstahlstange 103 unbekannter Geradheit in eine Auflagereinheit eingelegt und ein Messzyklus entweder durch Bewegen von Messstrahlung 109 in Querrichtung oder Drehen des Langprodukts um die Längsachse durchgeführt und anschließend wenigstens ein weiterer Messzyklus vollzogen. Anschließend werden als signifikante Daten beispielsweise die Medianwerte oder die Mittelwerte aus charakteristischen Intensitätswerten wie der Lage der maximalen Intensitäten der Detektionsstrahlung 118 für Referenzwerte einer Referenzgeradheit bestimmt, die anschließend als Referenz für das Bestimmen der Geradheit weiterer Langprodukte dient.

Für ein effizientes Durchführen eines Verfahrens gemäß der Erfindung zum Erreichen einer vorbestimmten Genauigkeit bei dem Bestimmen der Geradheit von Langprodukten ist es zweckmäßig, dass der Schritt des Drehens des Langprodukts unbekannter Geradheit und das Durchführen eines Messzyklus so oft wiederholt wird, bis die Streuung der signifikanten Daten einen vorbestimmten maximalen Grenzwert unterschritten hat. Dadurch wird die Vorrichtung so genau kalibriert, wie später die Geradheit von Langprodukten zu bestimmen ist. Dies ist insbesondere bei wechselnden Chargen mit verschiedenen Anforderungen an Geradheit zweckmäßig.

## Patentansprüche

1. Vorrichtung zum berührungsfreien Bestimmen der Geradheit wenigstens eines Langprodukts (103) mit wenigstens einem Strahlungsquellenmodul (106), mit dem Messstrahlung (109, 803) emittierbar ist, mit der wenigstens ein Langprodukt (103) beaufschlagbar ist, mit wenigstens einem Strahlungsdetektor (121), mit dem an in Längsrichtung des betreffenden Langprodukts (103) verteilten verschiedenen Auftreffbereichen (115) durch das oder wenigstens ein Langprodukt (103) modifizierte Messstrahlung (109, 803) als Detektionsstrahlung (118) erfassbar ist, und mit einer Steuer- und Auswerteeinheit (112), mit der aus aus der Detektionsstrahlung (118) generierten Daten die Geradheit des betreffenden von Messstrahlung (109, 803) beaufschlagten Langprodukts (103) bestimmbar ist, wobei mit dem oder jedem Strahlungsquellenmodul (106) punktartige oder sich in Längsrichtung des Langprodukts (103) erstreckende linienartige Messstrahlung (109, 803) derart erzeugbar ist, dass während eines Messzyklus die Messstrahlung (109, 803) quer zu der Längsrichtung des oder wenigstens eines Langprodukts (103) über das betreffende Langprodukt (103) aktiv bewegbar ist, wobei der oder jeder Strahlungsdetektor (121) so angeordnet und eingerichtet ist, dass während des Messzyklus ein von dem betreffenden Langprodukt (103) rückgeworfener Anteil von Messstrahlung (109, 803) als Detektionsstrahlung (118) in dem zeitlichen Verlauf ihrer Intensität erfassbar ist und wobei nach wenigstens einem Messzyklus mit der Steuer- und Auswerteeinheit (112) aus über eine Steuerung der aktiven Bewegung gewonnenen Ortsinformationen zur Lage der Auftreffbereiche (115) in Längsrichtung des betreffenden Langprodukts (103) und aus einer Differenz (Δt) zwischen der zeitlichen Lage (t₁) von charakteristischen Intensitätswerten der Detektionsstrahlung (118) des betreffenden Langprodukts (103) und der zeitlichen Lage (t₂) von charakteristischen Intensitätswerten der Detektionsstrahlung von einem als Referenz dienenden Langprodukt mit einer bestimmten Referenzgeradheit, die Geradheit des betreffenden Langprodukts (103) bestimmt wird.

2. Vorrichtung nach Anspruch 1, **dadurch gekennzeichnet, dass** die charakteristischen Intensitätswerte die maximalen Intensitäten umfassen.

3. Vorrichtung nach Anspruch 1 oder Anspruch 2, **dadurch gekennzeichnet, dass** die charakteristischen Intensitätswerte signifikante Intensitätswerte auf Flanken einer Intensitätsverteilung umfassen.

4. Vorrichtung nach einem der Ansprüche 1 bis 3, **dadurch gekennzeichnet, dass** die Ortsinformationen auf vorbekannten Längsgeschwindigkeiten und Quergeschwindigkeit beim Bewegen der Messstrahlung (109, 803) beruhen.

5. Vorrichtung nach einem der Ansprüche 1 bis 3, **dadurch gekennzeichnet, dass** die Ortsinformationen auf Richtungsinformationen beim Bewegen der Messstrahlung (109, 803) beruhen.

6. Vorrichtung nach einem der Ansprüche 1 bis 5, **dadurch gekennzeichnet, dass** die Messstrahlung (109, 803) ultraviolette, sichtbare oder infrarote Strahlung ist.

7. Vorrichtung nach einem der Ansprüche 1 bis 6, **dadurch gekennzeichnet, dass** das oder wenigstens ein Strahlungsquellenmodul (106) dazu eingerichtet ist, punktartige Messstrahlung (109) entlang einer zweidimensionalen Abtastbahn (606, 706) auch in Längsrichtung des betreffenden Langprodukts (103) über einen Messabschnitt zu bewegen.

8. Vorrichtung nach Anspruch 7, **dadurch gekennzeichnet, dass** sich die Abtastbahn (706) frei von einer Richtungsumkehr in Längsrichtung über den Messabschnitt erstreckt.

9. Vorrichtung nach einem der Ansprüche 1 bis 8, **dadurch gekennzeichnet, dass** wenigstens zwei Strahlungsdetektoren (121) vorhanden sind, die in Längsrichtung des betreffenden Langprodukts (103) beabstandet angeordnet sind.

10. Vorrichtung nach einem der Ansprüche 1 bis 9, **dadurch gekennzeichnet, dass** wenigstens zwei Strahlungsquellenmodule (106) vorhanden sind, die in Längsrichtung des betreffenden Langprodukts (103) beabstandet angeordnet sind.

11. Vorrichtung nach einem der Ansprüche 1 bis 10, **dadurch gekennzeichnet, dass** wenigstens zwei Strahlungsquellenmodule (106) vorhanden sind, die in Querrichtung des betreffenden Langprodukts (103) voneinander beabstandet sind.

12. Vorrichtung nach einem der Ansprüche 1 bis 11, **dadurch gekennzeichnet, dass** eine Auflagereinheit (703) vorhanden ist, mit der das betreffende Langprodukt (103) um seine Längsachse drehbar ist.

13. Verfahren zum Kalibrieren einer Vorrichtung nach einem der Ansprüche 1 bis 12 mit den Schritten
- Einlegen eine Langprodukts (103) unbekannter Geradheit in eine Auflagereinheit (603, 703),
- Durchführen eines Messzyklus,
- ein wenigstens einmaliges Drehen des Langprodukts (103) um seine Längsachse und Durchführen eines weiteren Messzyklus und
- Bestimmen von signifikanten Daten aus charakteristischen Intensitätswerten der Detektionsstrahlung (118) aus einer Anzahl von Messzyklen als Referenzwerte für eine Referenzgeradheit.

14. Verfahren nach Anspruch 13, **dadurch gekennzeichnet, dass** die signifikanten Daten Medianwerte von charakteristischen Intensitätswerten umfassen.

15. Verfahren nach Anspruch 13 oder Anspruch 14, **dadurch gekennzeichnet, dass** die signifikanten Daten Mittelwerte von charakteristischen Intensitätswerten umfassen.

## Claims

1. Device for contactlessly determining the straightness of at least one long product (103), comprising at least one radiation source module (106), by means of which measuring radiation (109, 803) can be emitted and applied to a long product (103), comprising at least one radiation detector (121), by means of which measuring radiation (109, 803) modified by the or at least one long product (103) can be detected as detection radiation (118) on various regions of incidence (115) distributed in the longitudinal direction of the relevant long product (103), and comprising a control and evaluation unit (112), by means of which the straightness of the relevant long product (103) struck by measuring radiation (109, 803) can be determined from data generated from the detection radiation (118), wherein point-like measuring radiation (109, 803) or linear measuring radiation that extends in the longitudinal direction of the long product (103) can be generated by means of the or each radiation source module (106) such that, during a measuring cycle, the measuring radiation (109, 803) can be actively moved over the relevant long product (103) transversely to the longitudinal direction of the or at least one long product (103), wherein the or each radiation detector (121) is arranged and configured such that, during the measuring cycle, a portion of measuring radiation (109, 803) reflected by the relevant long product (103) can be detected as detection radiation (118) in the temporal course of its intensity and wherein, after at least one measuring cycle, the straightness of the relevant long product (103) is determined by means of the control and evaluation unit (112) from location information obtained via control of the active movement and relating to the position of the regions of incidence (115) in the longitudinal direction of the relevant long product (103) and from a difference (Δt) between the temporal position (t₁) of characteristic intensity values of the detection radiation (118) of the relevant long product (103) and the temporal position (t₂) of characteristic intensity values of the detection radiation of a long product used as a reference and having a specific reference straightness.

2. Device according to claim 1, **characterised in that** the characteristic intensity values include the maximum intensities.

3. Device according to claim 1 or claim 2, **characterised in that** the characteristic intensity values include significant intensity values on edges of an intensity distribution.

4. Device according to any of claims 1 to 3, **characterised in that** the location information is based on known longitudinal speeds and transverse speed during movement of the measuring radiation (109, 803).

5. Device according to any of claims 1 to 3, **characterised in that** the location information is based on direction information during movement of the measuring radiation (109, 803).

6. Device according to any of claims 1 to 5, **characterised in that** the measuring radiation (109, 803) is ultraviolet, visible or infrared radiation.

7. Device according to any of claims 1 to 6, **characterised in that** the or at least one radiation source module (106) is configured to also move point-like measuring radiation (109) in the longitudinal direction of the long product (103) over a measurement section along a two-dimensional scan path (606, 706).

8. Device according to claim 7, **characterised in that** the scan path (706) extends in the longitudinal direction over the measurement section without reversing direction.

9. Device according to any of claims 1 to 8, **characterised in that** at least two radiation detectors (121) are provided, which are arranged so as to be spaced apart in the longitudinal direction of the relevant long product (103).

10. Device according to any of claims 1 to 9, **characterised in that** at least two radiation source modules (106) are provided, which are arranged so as to be spaced apart in the longitudinal direction of the relevant long product (103).

11. Device according to any of claims 1 to 10, **characterised in that** at least two radiation source modules (106) are provided, which are arranged so as to be spaced apart in the transverse direction of the relevant long product (103).

12. Device according to any of claims 1 to 11, **characterised in that** a bearing unit (703) is provided, by means of which the relevant long product (103) can be rotated about the longitudinal axis thereof.

13. Method for calibrating a device according to any of claims 1 to 12, comprising the steps of:
- inserting a long product (103) of an unknown straightness into a bearing unit (603, 703),
- carrying out a measuring cycle,
- rotating the long product (103) at least once about the longitudinal axis thereof and carrying out an additional measuring cycle, and
- determining significant data from characteristic intensity values of the detection radiation (118) from a number of measuring cycles as reference values for a reference straightness.

14. Method according to claim 13, **characterised in that** the significant data include median values of characteristic intensity values.

15. Method according to claim 13 or claim 14, **characterised in** the significant data include mean values of characteristic intensity values.

## Revendications

1. Dispositif servant à définir sans contact la rectitude d'au moins un produit allongé (103) avec au moins un module de source de rayonnement (106), avec lequel un rayonnement de mesure (109, 803) peut être émis, rayonnement de mesure (109, 803) avec lequel au moins un produit allongé (103) peut être impacté, avec au moins un détecteur de rayonnement (121), avec lequel le rayonnement de mesure (109, 803), modifié par le ou au moins un produit allongé (103) en différentes zones d'impact (115) réparties dans la direction longitudinale du produit allongé (103) concerné, peut être détecté comme rayonnement de détection (118), et avec une unité de commande et d'évaluation (112), avec laquelle la rectitude du produit allongé (103) concerné et impacté par le rayonnement de mesure (109, 803) peut être déterminée grâce aux données générées par le rayonnement de détection (118),
pour lequel, avec le ou chaque module de source de rayonnement (106), un rayonnement de mesure (109, 803) en forme de points ou en forme de lignes s'étendant dans la direction longitudinale du produit allongé (103) peut être généré de telle sorte que, durant un cycle de mesure, le rayonnement de mesure (109, 803) peut être déplacé activement transversalement par rapport à la direction longitudinale du ou d'au moins un produit allongé (103), au-dessus du produit allongé (103) concerné,
pour lequel le ou chaque détecteur de rayonnement (121) est disposé et agencé de telle sorte que, durant un cycle de mesure, une part du rayonnement de mesure (109, 803) réfléchi par le produit allongé (103) concerné peut être enregistrée comme rayonnement de détection (118) dans ses variations d'intensité dans le temps,
et pour lequel, après au moins un cycle de mesure, la rectitude du produit allongé (103) est déterminée grâce à l'unité de commande et d'évaluation (112) à partir d'informations de localisation relatives à la situation des zones d'impact (115) dans la direction longitudinale du produit allongé (103) concerné obtenues par une commande du déplacement actif, et à partir d'une différence (Δt) entre l'instant (t1) d'une valeur d'intensité caractéristique du rayonnement de détection (118) du produit allongé (103) concerné et l'instant (t2) d'une valeur d'intensité caractéristique du rayonnement de détection d'un produit allongé servant de référence avec une rectitude de référence donnée.

2. Dispositif selon la revendication 1, **caractérisé en ce que** les valeurs d'intensité caractéristiques comprennent les intensités maximales.

3. Dispositif selon la revendication 1 ou la revendication 2, **caractérisé en ce que** les valeurs d'intensité caractéristiques comprennent des valeurs d'intensité significatives sur les flancs d'une distribution d'intensité.

4. Dispositif selon l'une des revendications 1 à 3, **caractérisé en ce que** les informations de localisation reposent sur des vitesses longitudinales et des vitesses transversales connues préalablement lors du déplacement du rayonnement de mesure (109, 803).

5. Dispositif selon l'une des revendications 1 à 3, **caractérisé en ce que** les informations de localisation reposent sur des informations de direction lors du déplacement du rayonnement de mesure (109, 803).

6. Dispositif selon l'une des revendications 1 à 5, **caractérisé en ce que** le rayonnement de mesure (109, 803) est un rayonnement ultraviolet, visible ou infrarouge.

7. Dispositif selon l'une des revendications 1 à 6, **caractérisé en ce que** le ou au moins un module de source de rayonnement (106) est configuré pour déplacer un rayonnement de mesure (109) en forme de points le long d'un trajet de balayage (606, 706) bidimensionnel aussi dans la direction longitudinale du produit allongé (103) concerné au-dessus d'une section de mesure.

8. Dispositif selon la revendication 7, **caractérisé en ce que** le trajet de balayage (706) s'étend sans changement de direction dans la direction longitudinale au-dessus de la section de mesure.

9. Dispositif selon l'une des revendications 1 à 8, **caractérisé en ce qu'**il existe au moins deux détecteurs de rayonnement (121), qui sont disposés de façon distante l'un de l'autre dans la direction longitudinale du produit allongé (103) concerné.

10. Dispositif selon l'une des revendications 1 à 9, **caractérisé en ce qu'**il existe au moins deux modules de source de rayonnement (106), qui sont disposés de façon distante l'un de l'autre dans la direction longitudinale du produit allongé (103) concerné.

11. Dispositif selon l'une des revendications 1 à 10, **caractérisé en ce qu'**il existe au moins deux modules de source de rayonnement (106), qui sont disposés de façon distante l'un de l'autre dans la direction transversale du produit allongé (103) concerné.

12. Dispositif selon l'une des revendications 1 à 11, **caractérisé en ce qu'**il existe une unité de support (703) avec laquelle le produit allongé (103) concerné peut être pivoté autour de son axe longitudinal.

13. Procédé d'étalonnage d'un dispositif selon l'une des revendications 1 à 12 avec les étapes
- mise en place d'un produit allongé (103) avec une rectitude inconnue dans une unité de support (603, 703),
- exécution d'un cycle de mesure
- au moins une rotation du produit allongé (103) autour de son axe longitudinal puis exécution d'un nouveau cycle de mesure et
- détermination de données significatives issues de valeurs d'intensité caractéristiques du rayonnement de détection (118) à partir d'un certain nombre de cycles de mesures, comme valeurs de référence pour une rectitude de référence.

14. Procédé selon la revendication 13, **caractérisé en ce que** les données significatives englobent des valeurs médianes de valeurs d'intensité caractéristiques.

15. Procédé selon la revendication 13 ou la revendication 14, **caractérisé en ce que** les données significatives englobent des valeurs moyennes de valeurs d'intensité caractéristiques.
